(19) Europäisches Patentamt
European Patent Office
Office européen des brevets

(11) **EP 2 234 022 A1**

(12) **DEMANDE DE BREVET EUROPEEN**

(43) Date de publication:
**29.09.2010 Bulletin 2010/39**

(51) Int Cl.:
***G06F 17/30*** *(2006.01)*

(21) Numéro de dépôt: **10157412.7**

(22) Date de dépôt: **23.03.2010**

| (84) Etats contractants désignés: **AT BE BG CH CY CZ DE DK EE ES FI FR GB GR HR HU IE IS IT LI LT LU LV MC MK MT NL NO PL PT RO SE SI SK SM TR** Etats d'extension désignés: **AL BA ME RS** | (72) Inventeurs: <br>• **Adda, Serge** <br> **92160 Antony (FR)** <br>• **Chedru, Olivier** <br> **75015 Paris (FR)** |
| --- | --- |
| (30) Priorité: **24.03.2009 FR 0951902** | (74) Mandataire: **Pontet, Bernard** <br> **Pontet Allano & Associés** <br> **25, rue Jean Rostand** |
| (71) Demandeur: **Infovista SA** <br> **91940 Les Ulis (FR)** | **Parc Club Orsay Université** <br> **91893 Orsay Cedex (FR)** |

(54) **Procédé de gestion d'une base de données relationnelle de type SQL**

(57) L'invention concerne un procédé de gestion d'une base de données relationnelle de type SQL pour des informations de service d'infrastructure informatique et réseaux ; dans lequel procédé on crée, dans un système de gestion de base de données de type MySQL,
- un moteur de stockage de données en lecture seule, et
- des tables non modifiables, par exemple de type WORM

(« Write Once Read Many ») gérées par le moteur de stockage ; chaque table comprend une colonne de données de comptage numérique dite « timestamp » ; chaque table est partitionnée par intervalles de temps ; des fichiers de partition sont regroupés dans des sous-répertoires d'un système de fichiers, ces répertoires formant une arborescence dont chaque noeud est identifié de façon unique à partir d'un timestamp.

FIG. 1

**Description**

La présente invention se rapporte à un procédé de gestion d'une base de données relationnelle de type SQL pour des informations de service d'infrastructure informatique (serveurs, applications,...) et réseaux.

La convergence technologique des services offerts par les operateurs de télécommunication a mis en évidence le besoin de nouveaux outils (Voix sur IP, SMS...) permettant de gérer la performance d'un grand nombre de transactions simultanées. De plus les réseaux actuels supportent des flux de plusieurs dizaines de Gigabits. Cela se traduit pour les outils de gestion de la performance et de la qualité de services (capture IP directe, Netflow monitoring, gestion de commutateurs logiciels) par des besoins de taux d'insertion très élevé dans des bases de données.

La présente invention a pour but un système de gestion de base de données capable de gérer efficacement un flux important de données. En particulier on recherche un très haut taux d'insertion des données ainsi qu'une élimination des données anciennes au fil de l'eau. Un autre but de l'invention est une génération de rapports en temps réel. La présente invention a encore pour but une création d'index efficaces.

On atteint au moins l'un des objectifs précités avec un procédé de gestion d'une base de données relationnelle de type SQL pour des informations de service d'infrastructure informatique et réseaux ; dans lequel procédé on crée, dans un système de gestion de base de données relationnelle de type MySQL par exemple,

- un moteur de stockage de données en lecture seule, et
- des tables non modifiables gérées par le moteur de stockage ; chaque table comprend une colonne de données de comptage numérique dite « timestamp » ; chaque table est partitionnée par intervalles de temps ; des fichiers de partition sont regroupés dans des sous-répertoires d'un système de fichiers, ces répertoires formant une arborescence dont chaque noeud est identifié de façon unique à partir d'un timestamp.

Les tables selon l'invention sont non modifiables, c'est-à-dire qu'elles permettent l'écriture de données mais ne permettent pas la modification. On peut écrire une fois et lire autant de fois que souhaité sans jamais pouvoir physiquement altérer la donnée écrite. Les données anciennes peuvent cependant être effacées par le système pour laisser la place à des données plus récentes. On peut par exemple, de façon non limitative, utiliser la technologie dite pseudo-WORM (« Write Once Read Many » en anglais, une seule écriture pour de multiples lectures) où le système peut effacer les données anciennes sous certaines conditions.

Avec le procédé selon l'invention, le moteur de stockage en lecture seule permet uniquement de prendre en charge l'insertion de données et non pas la mise à jour de données déjà présentes dans le système. On évite ainsi des fonctionnalités telles que les transactions, les mises à jours,... qui ralentissent le système car consommatrices en temps de calcul. On évite donc toute consommation de ressource inutile. Avantageusement, pour des données indexées, les indexes selon l'invention ne nécessitent aucune maintenance et ne sont jamais reconstruits. Ils peuvent donc être optimaux tant en temps d'accès qu'en place occupée sur le disque.

Selon un mode réalisation avantageux de l'invention, on utilise la colonne dite « timestamp » pour fusionner des partitions entre elles en une nouvelle partition, et on définit un intervalle de temps pour cette nouvelle partition en fonction de l'âge des données contenues dedans.

Afin de permettre notamment la fourniture de rapports en temps réels, les partitions peuvent d'abord être construites en mémoire puis écrites sur un disque, ces partitions en mémoire étant accessibles par des requêtes de type SQL.

Selon une caractéristique de l'invention, chaque partition comporte un fichier de données et au moins un fichier d'index renfermant un arbre binaire parfait, et on utilise une fonction bijective dite TreeOrder pour générer ledit arbre binaire parfait et pour écrire séquentiellement des valeurs dudit arbre binaire parfait dans le fichier d'index en fonction d'une relation d'ordre existant entre les valeurs de l'arbre binaire parfait.

La fonction bijective est avantageusement conçue de façon à faire la correspondance entre d'une part chaque noeud de l'arbre binaire parfait, ces noeuds étant numérotés de haut en bas et de gauche à droite, d'une autre part les valeurs de l'arbre binaire parfait lorsque stockées dans une section du fichier d'index.

De préférence, la correspondance consiste à fournir la position de chaque noeud dans la section du fichier d'index en fonction de la position de la valeur correspondante dans une liste établie selon ladite relation d'ordre et en fonction de la cardinalité de cette même liste.

Selon un mode de mise en oeuvre de l'invention, lorsque l'arbre binaire parfait est incomplet et présente une cardinalité égale à C, on classe les valeurs de cet arbre binaire parfait incomplet par rapport au plus petit arbre binaire parfait complet de cardinal N pouvant contenir C noeuds de la manière suivante :

partant d'une position $TreeOrder_N(i)$ dans l'arbre binaire parfait complet pour un $i < C$, avec $i$ un index de cette table, on détermine une position $TreeOrder_C(i)$ dans l'arbre binaire parfait incomplet comme suit :

$$\text{Soit } L = C * 2 - N, \text{ avec } N = 2^{\text{roundup}(\log2(C))} - 1.$$

$$\text{Si } TreeOrder_N(i) > L \text{ alors}$$

$$TreeOrder_C(i) = TreeOrder_N(i) - (TreeOrder_N(i) - L) / 2$$

$$\text{Sinon}$$

$$TreeOrder_C(i) = TreeOrder_N(i)$$

Selon l'invention, chaque fichier d'index peut comporter :

- un en-tête,
- un arbre binaire parfait,
- une section de chaînes de caractères, et
- une section optionnelle pour des valeurs de l'index.

En particulier, lorsque l'espace alloué à l'arbre binaire parfait dans le fichier de l'index est complètement utilisé par des valeurs, des valeurs supplémentaires sont alors stockées dans la section optionnelle.

Par ailleurs, lorsqu'une table est destinée à contenir dans une colonne des données de type adresses IP, cette table contient en outre une colonne supplémentaire contenant des résultats de la résolution DNS desdites adresses IP, cette résolution étant réalisée lors de l'intégration desdites adresses IP au sein de la première colonne. Le moteur de stockage peut avantageusement comprendre un module faisant des résolutions DNS en parallèle.

D'autres avantages et caractéristiques de l'invention apparaîtront à l'examen de la description détaillée d'un mode de mise en oeuvre nullement limitatif, et des dessins annexés, sur lesquels :

La figure 1 est une vue illustrant l'arborescence des partitions d'une table selon l'invention ;

La figure 2 est un schéma simplifié illustrant un fichier de données et l'un des fichiers d'index associé ;

La figure 3 est un schéma simplifié illustrant l'organigramme d'un arbre binaire parfait selon l'invention ;

La figure 4 est un schéma simplifié illustrant la numérotation des noeuds de l'arbre binaire parfait de la figure 3 ;

La figure 5 est un schéma simplifié illustrant une section de l'arbre binaire parfait de la figure 3 stockée dans le fichier d'index ;

La figure 6 est une vue schématique d'un tableau représentant la correspondance opérée par la fonction bijective TreeOrder pour une liste de sept éléments ;

La figure 7 est un schéma simplifié illustrant un organigramme d'un arbre binaire parfait incomplet avec douze noeuds numérotés dans l'ordre d'écriture ;

La figure 8 est une vue schématique d'un tableau représentant la comparaison des positions entre un arbre binaire parfait complet de cardinal 15 et un arbre binaire parfait incomplet de cardinal 12 ;

La figure 9 est une vue illustrant une définition d'une table d'IPDR ; et

La figure 10 est une vue illustrant une fenêtre de configuration DNS de la table d'IPDR de la figure 9.

Le procédé selon la présente invention permet avantageusement de surveiller avec le protocole Netflow un lien d'une capacité de 10Gb avec un simple ordinateur de bureau. Un tel lien génère entre 1 et 3% de données Netflow, soit un trafic entre 100 et 300 Mb/s. En faisant l'hypothèse d'un trafic avec des conversions d'une dizaine de paquets, le nombre d'enregistrements Netflow peut être estimé sur un réseau conventionnel moyen à environ 100 000 enregistrements par seconde.

Bien que l'invention n'y soit pas limitée, on va maintenant décrire le procédé selon l'invention mis en oeuvre dans un système de gestion de base de données MySQL 5.1.

La présente invention s'applique avantageusement à des données relatives à des événements techniques. Ces données sont générées automatiquement avec un « timestamp » ou compteur numérique croissant et ne sont pas modifiées ultérieurement.

Pour gérer efficacement les données, on utilise le partitionnement massif des tables contenues dans la base de données selon l'invention. Le partitionnement permet d'éliminer en un seul appel système des données correspondant à une période de temps. La méthode classique qui consiste à effacer les lignes d'une table est trop couteuse. Mais le partitionnement reste avant tout un moyen de construire les indexes pour une période de temps, sans avoir à revenir par la suite sur une période déjà traitée. Cela permet de transformer un problème d'optimisation globale en un problème d'optimisation local, la localité étant une localité temporelle.

Le partitionnement consiste à diviser une table SQL. Cette division est définie par des règles de segmentation appliquées à un sous-ensemble des valeurs des colonnes. MySQL 5.1 propose un partitionnement standard qui comporte trop de restrictions. En particulier la base doit être capable de lire toutes les partitions en même temps ; cela induit une contrainte forte pour le système d'exploitation sur le nombre de fichiers ouverts simultanément. Cette contrainte ne permet pas de mettre en oeuvre le partitionnement massif selon la présente invention. Ainsi, dans le cas de tables selon l'invention, une table a toujours une colonne 'timestamp' et la table est partitionnée par intervalles de temps qui peuvent être de l'ordre de la minute ; la politique de rétention peut être de l'ordre d'une ou plusieurs années.

Le partitionnement selon l'invention est géré par le moteur de stockage. Chaque partition possède ses index. Les partitions peuvent être parcourues en parallèle afin de diminuer le temps de réponse sur des systèmes multi-coeurs ou multiprocesseurs.

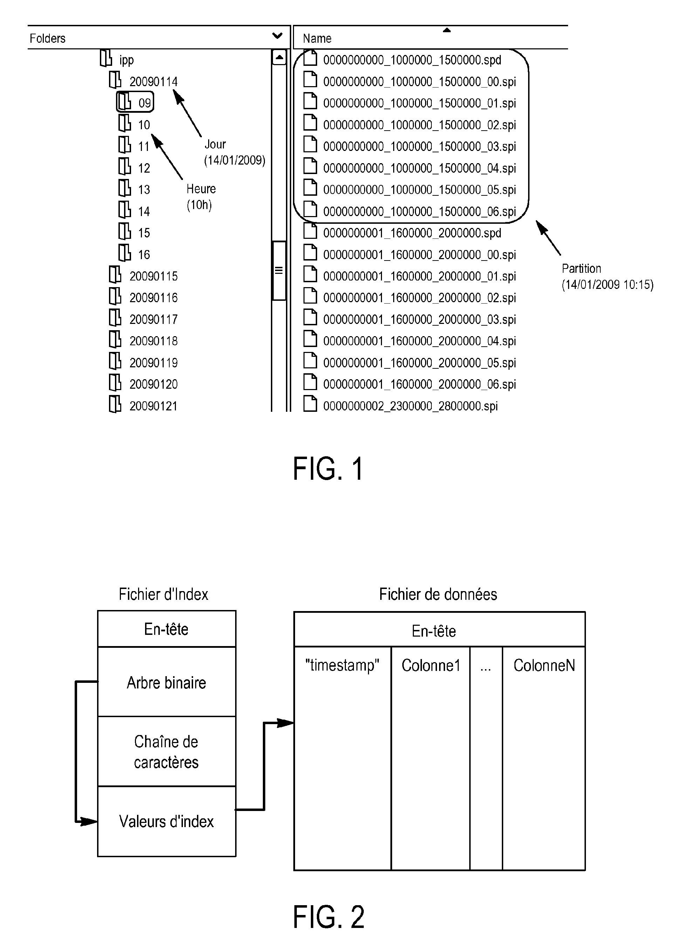

Les fichiers de partition sont regroupés dans des sous-répertoires d'un système de fichier. Ces répertoires forment un arbre dont chaque noeud est identifié de façon unique à partir d'un timestamp comme indiqué par la figure 1. Cette figure montre l'arborescence des partitions pour la table 'ipp'. Les noms de fichier avec le suffixe '.spd' correspondent aux fichiers de données et ceux avec le suffixe '.spi' aux fichiers d'indexes. Les fichiers 'spi' sont au nombre de 7 pour une partition car la table 'ipp' possède 7 indexes. L'arborescence possède un nombre de niveaux qui dépend de l'intervalle de temps utilisé pour le partitionnement.

La base de données selon l'invention comporte la possibilité de définir un intervalle de temps différent pour le partitionnement en fonction de l'âge des données. Par exemple, les données du mois en cours sont partitionnées à l'heure, puis les données des trois mois suivants sont partitionnées à la journée ; enfin les données plus anciennes sont partitionnées au mois.

Le système a donc la possibilité de fusionner les partitions en partitions plus importantes au fur et à mesure que les données qu'elles contiennent vieillissent. Cette opération est faite en utilisant la colonne 'timestamp'.

Par ailleurs, afin d'optimiser les insertions, on construit les partitions en mémoire avant de les écrire sur disque. Pour fournir un accès temps réel aux données, les requêtes SQL peuvent prendre en compte les données en mémoire avant qu'elles soient écrites sur le disque. Cette fonctionnalité bénéficie de la fusion de partition. Cette dernière permet de garder une taille de partition compatible avec la mémoire disponible pour la construction des partitions.

Chaque partition est composée d'un fichier de données (« data file ») et d'un fichier pour chacun des indexes. La figure 2 décrit la structure d'un fichier d'index pour une partition. Un fichier d'index consiste en un en-tête (« header »), un arbre binaire (« binary tree »), une section de chaines de caractère (« String table »), ainsi qu'une section optionnelle pour les valeurs de l'index (« index values »). L'espace alloué à l'arbre binaire est limité ; si la limite n'est pas atteinte chaque noeud de l'arbre contient les valeurs d'index correspondant à une ligne de la table, sinon les valeurs de l'index sont stockées dans la section optionnelle à la fin du fichier.

Les arbres binaires sont produits grâce une fonction bijective TreeOrder. Cette fonction permet de générer un arbre binaire parfait pour un index et de l'écrire séquentiellement dans un fichier. Un arbre binaire parfait permet d'éliminer la moitié des valeurs restantes à chaque fois que le parcours de l'arbre s'enfonce d'un niveau de profondeur supplémentaire.

Soit $(V_i), i \in [0,n]$, une liste de valeurs pour lesquelles il existe une relation d'ordre et soit O, une fonction telle que si $O(i) > O(j)$ alors $V_{o(i)} \geq Vo(j)$.

A titre d'exemple, pour une suite de 7 éléments:

$V_0, V_1, V_2, V_3, V_4, V_5, V_6$.

Une fois triée selon une relation d'ordre, cette liste est la suivante :

$V_2, V_4, V_1, V_6, V_3, V_5, V_0$

Donc $O(0) = 2$, $O(1) = 4$, $O(2) = 1$, $O(3) = 6$, $O(4)=_3$, $O(5)=5$ et $O(6) = 0$. Soit V' la suite définie par $V'_i = V_{o(i)}$, alors la suite $(V_2, V_4, V_1, V_6, V_3, V_5, V_0)$ s'écrit aussi $(V'_0, V'_1, V'_2, V'_3, V'_4, V'_5, V'_6)$.

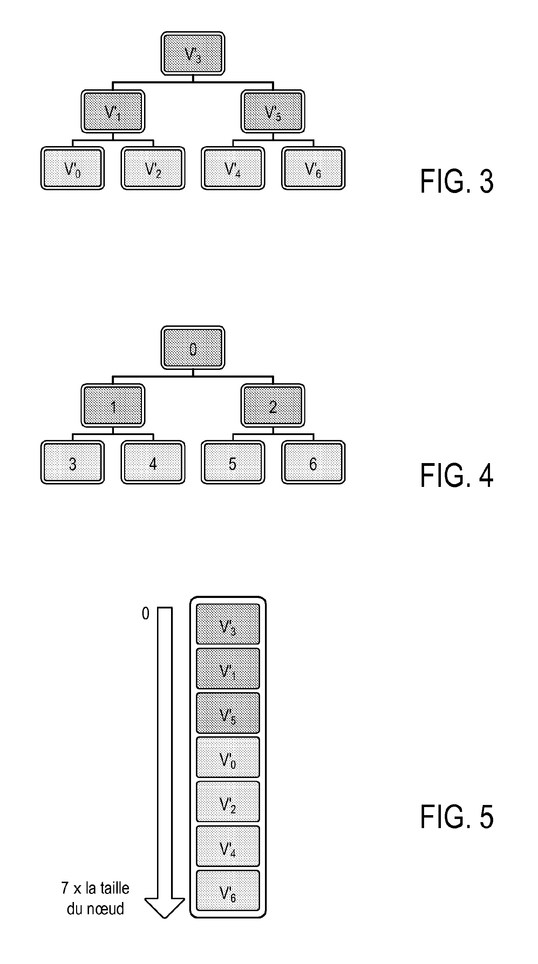

L'arbre binaire parfait contenant tous les éléments de la liste $(V_i)$ est décrit par la figure 3. En effet, soit v une valeur pour laquelle la fonction d'ordre est définie. Pour savoir si v est une valeur de la suite V, il suffit de comparer v et $V'_3$. Si $v < V'_3$ alors v doit être comparée à $V'_1$. Si $v < V'_1$, v est comparée $V'_0$. Si $v < V'_0$ alors v n'appartient pas la liste et cela a été trouvé en 3 itérations. Quand v est supérieur à la valeur du noeud, il suffit de comparer v au noeud enfant de droite.

Si on numérote les noeuds de l'arbre de la figure 3 de haut en bas et de gauche à droite on obtient le résultat de la figure 4.

Il s'agit maintenant d'écrire les noeuds dans le fichier d'indexes. Or un fichier est un espace à une seule dimension. Les noeuds sont écrits les uns à la suite des autres en suivant leurs numérotations comme montré par la figure 5.

TreeOrder fournit la position d'un noeud dans la section « arbre binaire » du fichier d'index en fonction du rang de la valeur associée à ce noeud dans la liste triée V' et de la cardinalité de cette même liste.

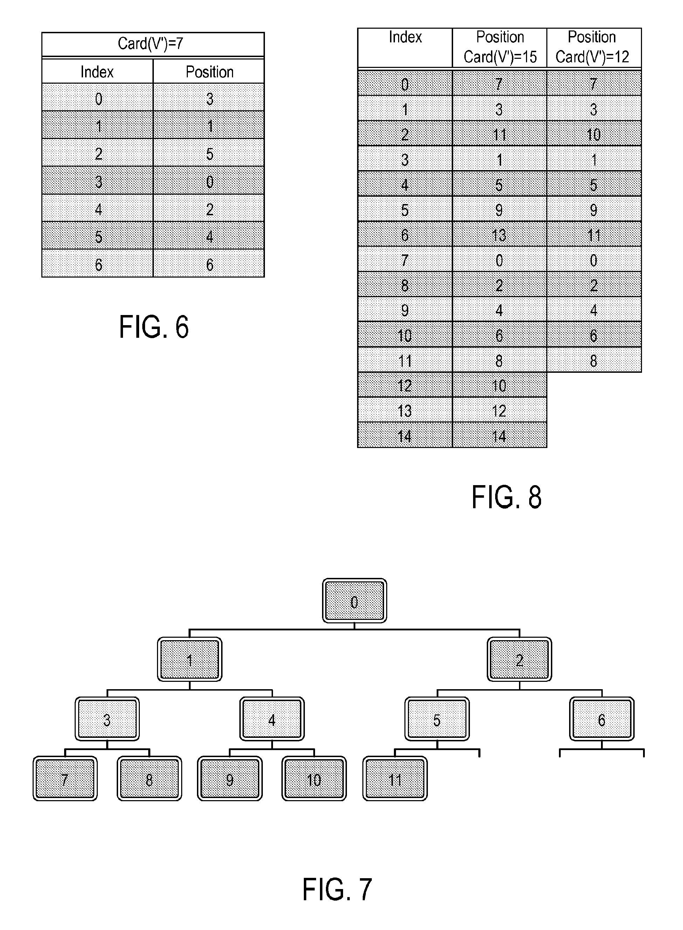

Sur la figure 6, on voit la correspondance établie par TreeOrder pour table de 7 éléments.

La fonction TreeOrder étant bijective, il existe la fonction inverse TreeOrder$^{-1}$ qui permet également de retrouver l'ordre dans la liste à partir de la position de l'enregistrement dans le fichier, ce qui est utile lors du parcours d'index.

Si l'index ne comporte pas $2^n$-1 valeurs, l'arbre n'est pas complet et il faut modifier le comportement de la fonction TreeOrder pour tenir compte du fait que le dernier niveau de l'arbre comporte moins de feuilles qu'un arbre complet.

Comme montré sur la figure 7 dans le cas d'un arbre incomplet, il faut supprimer une partie des feuilles.

La figure 8 montre la correspondance entre l'index et la position pour un arbre incomplet. On voit que par rapport à l'arbre complet la transformation n'est pas triviale car c'est potentiellement l'ensemble des positions qui peut changer.

Pour une cardinalité quelconque C on trouve la cardinalité de l'arbre complet le plus petit pouvant contenir C noeuds. Soit $N = 2^{roundup(log2(C))}-1$.

Partant de la position $TreeOrder_N(i)$ dans l'arbre complet pour un index $i < C$, on détermine la position $TreeOrder_C(i)$ dans l'arbre incomplet comme suit :

$$Soit\ L = C * 2 - N.$$

$$Si\ TreeOrder_N(i) > L\ alors$$

$$TreeOrder_C(i) = TreeOrder_N(i) - (TreeOrder_N(i) - L) / 2$$

$$Sinon$$

$$TreeOrder_C(i) = TreeOrder_N(i)$$

En complément notamment de ce qui précède, un des contextes d'utilisation du procédé selon l'invention est l'exploitation d'enregistrements de type « Internet Protocol Detail Record » (IPDR). Il s'agit des enregistrements décrivant l'utilisation de service IP. A ce titre, ces enregistrements comportent une ou plusieurs adresses IP. Ces adresses IP correspondent soit à l'entité qui consomme le service, soit à celle qui le fournit. Mais afin d'utiliser les IPDRs, il est utile de pouvoir résoudre ces adresses IP en noms plus significatifs. Cela se fait grâce au protocole DNS. Or, dans certains cas, si une identité a un nom qui reste inchangé au cours du temps, son adresse IP peut changer. C'est le cas par exemple dans les réseaux utilisant la technologie Dynamic Host Configuration Protocol (DHCP). Afin qu'un IPDR restent exploitable au cours du temps, on prévoit de stocker les adresses IP qu'il contient, mais aussi les noms qui résultent de la résolution de ces adresses au moment de la production de l'IPDR, car retarder la résolution au moment de l'exploitation de l'IPDR pourra conduire à un résultat différent et donc faux.

La résolution DNS faite à l'insertion de l'IPDR dans la base procure d'autres avantages. En particulier, la résolution étant déjà faite, le temps d'interrogation des tables d'IPDRs est plus rapide quand des noms sont nécessaires. Pour ce faire, le système de gestion de base de données selon l'invention comporte un module logiciel capable de faire beaucoup de résolutions DNS en parallèle sans consommer trop de ressources système, car les services fournis par les systèmes d'exploitation ne sont pas conçus pour une telle utilisation.

La présente invention offre donc la possibilité de configurer une table SQL en définissant une colonne comme contenant les résultats de la résolution DNS d'adresses IP contenues dans une autre colonne de la table. Une table peut contenir plusieurs de ces couples IP / Nom.

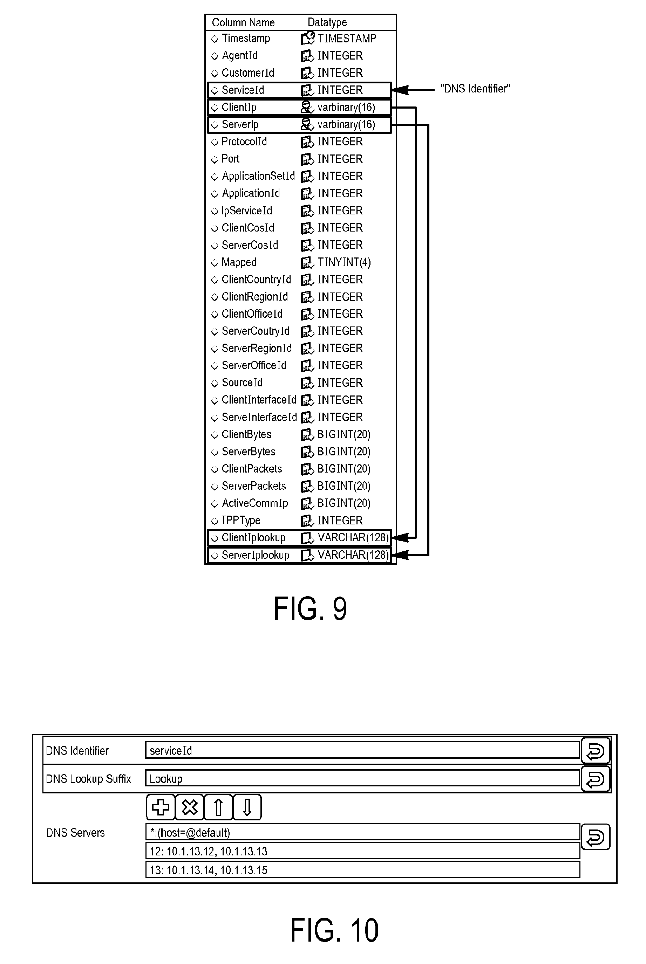

De plus la configuration de la table permet de choisir une liste spécifique de serveurs DNS en fonction d'une valeur d'une colonne. La figure 10 montre un exemple de configuration. Le champ « DNS Identifier » indique quelle colonne contient la valeur, pour un enregistrement donné, qui permet de sélectionner le groupe de server DNS à interroger pour faire la résolution. Avec l'exemple de la figure 9 où l'on définit une table d'IPDR, c'est la colonne serviceId qui est utilisée. Si le serviceId est 12, le groupe sera (10.1.13.12, 10.1.13.13), si le serviceId est 13, le groupe sera (10.1.13.14, 10.1.13.15). Pour tout autre valeur, le serveur DNS du système hébergeant la base de données selon l'invention sera interrogé (* :host=@default). Les serveurs dans un groupe sont interrogés à tour de rôle, de façon à lisser la charge sur l'ensemble du groupe et d'optimiser le temps de résolution.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de gestion d'une base de données relationnelle de type SQL pour des informations de service d'infrastructure informatique et réseaux ; dans lequel procédé on crée, dans un système de gestion de base de données relationnelle,

   - un moteur de stockage de données en lecture seule, et
   - des tables non modifiables gérées par le moteur de stockage ; chaque table comprend une colonne de données de comptage numérique dite « timestamp » ; chaque table est partitionnée par intervalles de temps ; des fichiers de partition sont regroupés dans des sous-répertoires d'un système de fichiers, ces répertoires formant une arborescence dont chaque noeud est identifié de façon unique à partir d'un timestamp.

2. Procédé selon la revendication 1, **caractérisé en ce qu'**on utilise la colonne dite « timestamp » pour fusionner des partitions entre elles en une nouvelle partition, et on définit un intervalle de temps pour cette nouvelle partition en fonction de l'âge des données contenues dedans.

3. Procédé selon la revendication 1 ou 2, **caractérisé en ce que** les partitions sont d'abord construites en mémoire puis écrites sur un disque, ces partitions en mémoire étant accessibles par des requêtes de type SQL.

4. Procédé selon l'une quelconque des revendications précédentes, **caractérisé en ce que** chaque partition comporte un fichier de données et au moins un fichier d'index renfermant un arbre binaire parfait, et on utilise une fonction bijective dite TreeOrder pour générer ledit arbre binaire parfait et pour écrire séquentiellement des valeurs dudit arbre binaire parfait dans le fichier d'index en fonction d'une relation d'ordre existant entre les valeurs de l'arbre binaire parfait.

5. Procédé selon la revendication 4, **caractérisé en ce que** la fonction bijective est conçue de façon à faire la correspondance entre d'une part chaque noeud de l'arbre binaire parfait, ces noeuds étant numérotés de haut en bas et de gauche à droite, d'une autre part les valeurs de l'arbre binaire parfait lorsque stockées dans une section du fichier d'index.

6. Procédé selon la revendication 5, **caractérisé en ce que** la correspondance consiste à fournir la position de chaque noeud dans la section du fichier d'index en fonction de la position de la valeur correspondante dans une liste établie selon ladite relation d'ordre et en fonction de la cardinalité de cette même liste.

7. Procédé selon la revendication 6, **caractérisé en ce que** lorsque l'arbre binaire parfait est incomplet et présente une cardinalité égale à C, on classe les valeurs de cet arbre binaire parfait incomplet par rapport au plus petit un arbre binaire parfait complet de cardinal N pouvant contenir C noeuds de la manière suivante :

   partant d'une position $TreeOrder_N(i)$ dans l'arbre binaire parfait complet pour un $i < C$, avec $i$ un index de cette table, on détermine une position $TreeOrder_C(i)$ dans l'arbre binaire parfait incomplet comme suit :

Soit $L = C * 2 - N$, avec $N = 2^{roundup(log2(C))} - 1$.

Si $TreeOrder_N(i) > L$ alors

$TreeOrder_C(i) = TreeOrder_N(i) - (TreeOrder_N(i) - L) / 2$

Sinon

$TreeOrder_C(i) = TreeOrder_N(i)$

**8.** Procédé selon l'une quelconque des revendications 4 à 7, **caractérisé en ce que** chaque fichier d'index comporte :

- un en-tête,
- un arbre binaire parfait,
- une section de chaînes de caractères, et
- une section optionnelle pour des valeurs de l'index.

**9.** Procédé selon la revendication 8, **caractérisé en ce que** lorsque l'espace alloué à l'arbre binaire parfait dans le fichier de l'index est complètement utilisé par des valeurs, des valeurs supplémentaires sont alors stockées dans la section optionnelle.

**10.** Procédé selon l'une quelconque des revendications précédentes, **caractérisé en ce que** lorsqu'une table est destinée à contenir dans une première colonne des données de type adresses IP, cette table contient en outre une seconde colonne contenant des résultats de la résolution DNS desdites adresses IP, cette résolution étant réalisée lors de l'intégration desdites adresses IP au sein de la première colonne.

**11.** Procédé selon la revendication 10, **caractérisé en ce que** le moteur de stockage comprend un module faisant des résolutions DNS en parallèle.

| Folders | ⌄ | Name | ▲ |
|---|---|---|---|

- 📁 ipp
  - 📁 20090114
    - 📁 09
    - 📁 10
    - 📁 11
    - 📁 12
    - 📁 13
    - 📁 14
    - 📁 15
    - 📁 16
  - 📁 20090115
  - 📁 20090116
  - 📁 20090117
  - 📁 20090118
  - 📁 20090119
  - 📁 20090120
  - 📁 20090121

Jour (14/01/2009)

Heure (10h)

📄 0000000000_1000000_1500000.spd
📄 0000000000_1000000_1500000_00.spi
📄 0000000000_1000000_1500000_01.spi
📄 0000000000_1000000_1500000_02.spi
📄 0000000000_1000000_1500000_03.spi
📄 0000000000_1000000_1500000_04.spi
📄 0000000000_1000000_1500000_05.spi
📄 0000000000_1000000_1500000_06.spi
📄 0000000001_1600000_2000000.spd
📄 0000000001_1600000_2000000_00.spi
📄 0000000001_1600000_2000000_01.spi
📄 0000000001_1600000_2000000_02.spi
📄 0000000001_1600000_2000000_03.spi
📄 0000000001_1600000_2000000_04.spi
📄 0000000001_1600000_2000000_05.spi
📄 0000000001_1600000_2000000_06.spi
📄 0000000002_2300000_2800000.spi

Partition (14/01/2009 10:15)

## FIG. 1

Fichier d'Index

| En-tête |
|---|
| Arbre binaire |
| Chaîne de caractères |
| Valeurs d'index |

Fichier de données

| En-tête | | | |
|---|---|---|---|
| "timestamp" | Colonne1 | ... | ColonneN |

## FIG. 2

FIG. 3

FIG. 4

FIG. 5

7 x la taille du nœud

| Card(V')=7 | |
|---|---|
| Index | Position |
| 0 | 3 |
| 1 | 1 |
| 2 | 5 |
| 3 | 0 |
| 4 | 2 |
| 5 | 4 |
| 6 | 6 |

FIG. 6

| Index | Position Card(V')=15 | Position Card(V')=12 |
|---|---|---|
| 0 | 7 | 7 |
| 1 | 3 | 3 |
| 2 | 11 | 10 |
| 3 | 1 | 1 |
| 4 | 5 | 5 |
| 5 | 9 | 9 |
| 6 | 13 | 11 |
| 7 | 0 | 0 |
| 8 | 2 | 2 |
| 9 | 4 | 4 |
| 10 | 6 | 6 |
| 11 | 8 | 8 |
| 12 | 10 | |
| 13 | 12 | |
| 14 | 14 | |

FIG. 8

FIG. 7

| Column Name | Datatype |
|---|---|
| Timestamp | TIMESTAMP |
| AgentId | INTEGER |
| CustomerId | INTEGER |
| ServiceId | INTEGER |
| ClientIp | varbinary(16) |
| ServerIp | varbinary(16) |
| ProtocolId | INTEGER |
| Port | INTEGER |
| ApplicationSetId | INTEGER |
| ApplicationId | INTEGER |
| IpServiceId | INTEGER |
| ClientCosId | INTEGER |
| ServerCosId | INTEGER |
| Mapped | TINYINT(4) |
| ClientCountryId | INTEGER |
| ClientRegionId | INTEGER |
| ClientOfficeId | INTEGER |
| ServerCoutryId | INTEGER |
| ServerRegionId | INTEGER |
| ServerOfficeId | INTEGER |
| SourceId | INTEGER |
| ClientInterfaceId | INTEGER |
| ServeInterfaceId | INTEGER |
| ClientBytes | BIGINT(20) |
| ServerBytes | BIGINT(20) |
| ClientPackets | BIGINT(20) |
| ServerPackets | BIGINT(20) |
| ActiveCommIp | BIGINT(20) |
| IPPType | INTEGER |
| ClientIplookup | VARCHAR(128) |
| ServerIplookup | VARCHAR(128) |

"DNS Identifier"

## FIG. 9

| DNS Identifier | serviceId |
|---|---|
| DNS Lookup Suffix | Lookup |

| DNS Servers | *:(host=@default) |
|---|---|
| | 12: 10.1.13.12, 10.1.13.13 |
| | 13: 10.1.13.14, 10.1.13.15 |

## FIG. 10

| Europäisches Patentamt / European Patent Office / Office européen des brevets | **RAPPORT DE RECHERCHE EUROPEENNE** | Numéro de la demande<br>EP 10 15 7412 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 6 049 804 A (BURGESS JOHN G [US] ET AL) 11 avril 2000 (2000-04-11)<br>* abrégé *<br>* colonne 3, ligne 49 - colonne 4, ligne 6; figure 3 *<br>* colonne 4, ligne 8 - colonne 5, ligne 33 *<br>* colonne 6, ligne 10 - ligne 22; figure 9 *<br>* colonne 6, ligne 28 - ligne 32 *<br>* colonne 6, ligne 62 - colonne 7, ligne 46; figure 13 *<br>----- | 1-11 | INV.<br>G06F17/30 |
| X | US 2006/235821 A1 (ARMANGAU PHILIPPE [US] ET AL) 19 octobre 2006 (2006-10-19)<br>* abrégé *<br>* figures 5,6 *<br>----- | 1-11 | |
| X | EP 1 471 447 A2 (SAP AG [DE]) 27 octobre 2004 (2004-10-27)<br>* le document en entier *<br>----- | 1-11 | |
| X | US 2005/182776 A1 (YENNIE CLARK [US]) 18 août 2005 (2005-08-18)<br>* le document en entier *<br>----- | 1-11 | DOMAINES TECHNIQUES RECHERCHES (IPC)<br><br>G06F |
| X | PRAVEEN SESHADRI: "The Design and Implementation of a Sequence Database System"<br>PROCEEDINGS OF THE 22ND VLDB CONFERENCE, [Online] 1996, pages 99-110, XP002559249 [extrait le 2009-12-08]<br>* le document en entier *<br>----- | 1-11 | |

-/--

Le présent rapport a été établi pour toutes les revendications

| Lieu de la recherche | Date d'achèvement de la recherche | Examinateur |
|---|---|---|
| Munich | 17 mai 2010 | Wohner, Wolfgang |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 10 15 7412

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | TORP K ET AL: "EFFECTIVE TIMESTAMPING IN DATABASES"<br>VLDB JOURNAL, SPRINGER VERLAG, BERLIN, DE, vol. 8, no. 1999,<br>1 janvier 1999 (1999-01-01), pages 267-288, XP001187130<br>ISSN: 1066-8888<br>* le document en entier *<br>----- | 1-11 | |
| A | ANONYMOUS: "Time Series: The Next Step for Telecommunications Data Management"<br>INFORMIX WHITE PAPER,<br>1 janvier 1999 (1999-01-01), page complete, XP002364437<br>* le document en entier *<br>----- | 1-11 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 17 mai 2010 | Wohner, Wolfgang |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 15 7412

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-05-2010

| Document brevet cité au rapport de recherche | | Date de publication | Membre(s) de la famille de brevet(s) | | Date de publication |
|---|---|---|---|---|---|
| US 6049804 | A | 11-04-2000 | EP | 0772139 A2 | 07-05-1997 |
| | | | JP | 9212528 A | 15-08-1997 |
| | | | US | 5727197 A | 10-03-1998 |
| US 2006235821 | A1 | 19-10-2006 | AUCUN | | |
| EP 1471447 | A2 | 27-10-2004 | AUCUN | | |
| US 2005182776 | A1 | 18-08-2005 | AU | 2005214911 A1 | 01-09-2005 |
| | | | CA | 2557406 A1 | 01-09-2005 |
| | | | EP | 1740597 A2 | 10-01-2007 |
| | | | JP | 2007526564 T | 13-09-2007 |
| | | | WO | 2005079404 A2 | 01-09-2005 |

EPO FORM P0460

Pour tout renseignement concernant cette annexe : voir Journal Officiel de l'Office européen des brevets, No.12/82